# EUROPÄISCHE PATENTANMELDUNG

(11) **EP 4 001 245 A1**
(43) Veröffentlichungstag der Anmeldung: **25.05.2022**
(21) Anmeldenummer: 20207428.2
(22) Anmeldetag: 13.11.2020
(51) Int. Cl.: C04B 41/84, C04B 41/64, C04B 41/85, C04B 41/68, C04B 41/89, C04B 41/70, C03C 17/00

(54) **VERFAHREN ZUM MODIFIZIEREN DER OBERFLÄCHENEIGENSCHAFTEN VON MINERALISCHEN SUBSTRATEN, GLAS- UND GLASIERTEN SUBSTRATEN**

(71) Anmelder: N-Tec GmbH, 84051 Essenbach Altheim (DE)
(72) Erfinder: INTERWIES, Jan, 84051 Essenbach-Altheim (DE)
(74) Vertreter: Tomerius, Isabel

(57) **Zusammenfassung**

Verfahren zum Modifizieren der Oberflächeneigenschaften von mineralischen Substraten, Glas- und glasierten Substraten, bei dem ein Precursor-Material auf die Oberfläche des zu modifizierenden Substrats aufgebracht und die Oberfläche nachfolgend entweder getrocknet oder gereinigt oder gereinigt und getrocknet wird.

## Beschreibung

Die vorliegende Erfindung betrifft ein Verfahren zum Modifizieren der Oberflächeneigenschaften von mineralischen Substraten, Glas- und glasierten Substraten.

Materialien mit mineralischen Oberflächen oder allgemein mineralische Substrate finden heutzutage vielfältige Anwendungen in den unterschiedlichsten Bereichen. Sie dienen als Bau- und Konstruktionsmaterialien, Arbeitsplatten, Wand- und Bodenfliesen und vieles mehr. Diese Materialien umfassen insbesondere Naturstein, Kunststein, Keramik und Beton. Auch Glas findet vielfach Anwendung, zum Beispiel als Fensterglas, für Duschkabinen und bei Möbeln.

Sämtlichen dieser Materialien ist gemein, dass sie gewöhnlich hinsichtlich ihrer Oberflächeneigenschaften verbesserungsbedürftig sind oder zumindest Alternativen zu bisherigen Verfahren zur Herstellung derartiger Materialien wünschenswert sind. Die angestrebten Verbesserungen betreffen insbesondere die Oberflächenhärte, aber auch die Schmutzbeständigkeit und/oder die Möglichkeit der leichten Reinigung solcher Oberflächen, deren hydrophobe oder hydrophile Eigenschaften und deren Verhalten gegenüber mikrobiellen Keimen, insbesondere Bakterien, Viren, Algen und Pilzen. Darüber hinaus besteht ein Bedarf an technisch einfachen und wirtschaftlichen Verfahren.

Aus dem Stand der Technik sind bereits Verfahren bekannt, mit denen Oberflächeneigenschaften von mineralischen Substraten modifiziert und, allgemein, verbessert werden. Erwähnenswert sind in diesem Zusammenhang die DE10346018, die DE102011087060 sowie die DE102016114000. Gemeinhin weisen diese Materialen zum Beispiel immer noch eine verbesserungswürdige Oberflächenhärte auf.

Trotz vielfältiger Bemühungen auf dem vorliegenden Gebiet, besteht weiterhin ein Bedarf an möglichst einfachen und besonders wirtschaftlichen Verfahren und es ist daher Aufgabe der vorliegenden Erfindung zumindest ein weiteres Verfahren zum Härten von mineralischen Oberflächen anzugeben, das zumindest einen aus dem Stand der Technik bekannten Nachteile überwindet.

Die vorliegende Aufgabe wird durch ein Verfahren gemäß dem beigefügten Anspruch 1 und der nebengeordneten Ansprüche 4 und 9 gelöst. Vorteilhafte Ausgestaltungen sind jeweils Gegenstand der direkt oder indirekt rückbezogenen Ansprüche.

In seiner einfachsten Ausgestaltung betrifft die vorliegende Erfindung ein Verfahren zum Modifizieren der Oberflächeneigenschaften von mineralischen Substraten, Glas- und glasierten Substraten, bei dem ein Precursor-Material auf die Oberfläche des zu härtenden Substrats aufgebracht und die Oberfläche nachfolgend entweder getrocknet oder gereinigt oder gereinigt und getrocknet wird.

Die mineralischen Oberflächen umfassen dabei insbesondere solche von Naturstein, Kunststein, Keramik und Beton, wobei aber sämtliche mineralischen Oberflächen mit dem erfindungsgemäßen Verfahren bearbeitbar sind, so zum Beispiel auch von Gips oder Gipsfaserplatten.

Bei den Untersuchungen zu der vorliegenden Erfindung hat sich überraschend herausgestellt, dass bereits das Aufbringen eines Precursor-Materials, das ausgehend von einem oder mehreren Mitgliedern der drei- und vierwertige Metallalkoxide, kolloidales Kieselsol, Alkaliwasserglas sowie Tetraethylorthosilikat-Hydrolysat, Methyltriethylorthosilikat-Hydrolysat und drei- oder vierwertige Metallhalogenide umfassenden Gruppe hergestellt ist, wobei das Precursor-Material aus der vorgenannten Gruppe nicht ausschließlich ausgehend von kolloidalem Kieselsol, Alkaliwasserglas oder einer Kombination dieser beiden gewählt ist, zu einer Steigerung der Oberflächenhärte des behandelten Substrats führt. Besonders überraschend war hierbei, dass bereits das Auftragen eines Precursor-Materials, das ein einziges Mitglied der vorstehend genannten Gruppe umfasst, solange dies nicht Kieselsol oder Alkaliwasserglas ist, und ein einfaches Trocknen nach dem Auftrag eine derartige Steigerung der Oberflächenhärte des behandelten Substrats bewirken kann.

Bei der Wahl von mehreren Verbindungen zum Herstellen des Precursor-Materials sind die Kombinationen aus Metallalkoxid und Tetraethylorthosilikat-Hydrolysat und/oder Methyltriethylorthosilikat-Hydrolisat; Metallalkoxid, Kieselsol und/oder Alkaliwasserglas; Metallalkoxid, Tetraethylorthosilikat-Hydrolysat und/oder Methyltriethylorthosilikat-Hydrolisat und Kieselsol und/oder Wasserglas besonders bevorzugt. Diese Kombinationen als Ausgang für das Precursor-Material führen für sich bereits zu hervorragenden Ergebnissen hinsichtlich der Härte der behandelten Substrate, ohne dass eine weitere Funktionalisierung erforderlich wäre.

Unabhängig von der gewählten Kombination der genannten Ausgangsverbindungen zum Herstellen des Precursor-Materials werden die drei- und/oder vierwertigen Metallalkoxide aus den Metallalkoxiden von B, Al, Si, Ti und Zr und die Metallhalogenide aus Tetrachlorsilan, Trichlorsilan, Titantetrachlorid, Titantrichlorid, Aluminiumtrichlorid, Zirkoniumtetrachlorid sowie Bortrichlorid bevorzugt ausgewählt. Hierbei sind die Metallalkoxide aufgrund ihrer leichteren Handhabbarkeit besonders bevorzugt.

Eine vorteilhafte Weiterbildung des erfindungsgemäßen Verfahrens, die unabhängig von der Anzahl der zum Herstellen des Precursor-Materials gewählten Komponenten ist, sieht vor, dass das Substrat weiter funktionalisiert wird, wobei unter Funktionalisieren im Rahmen der vorliegenden Erfindung insbesondere ein Versehen der Substratoberfläche mit weiteren vorteilhaften und daher wünschenswerten Eigenschaften verstanden wird. Dieses weitere Funktionalisieren kann eine nochmalige Steigerung der Oberflächenhärte, ein Verleihen antimikrobieller Eigenschaften, ein Färben, eine Farbvertiefung, eine Erhöhung des Glanzgrades, eine Verbesserung der chemischen Beständigkeit, eine Verbesserung der Ritzbeständigkeit oder eine Kombination von zwei oder mehreren dieser Eigenschaften sein.

Um das zu erreichen wird dem Precursor-Material in einer besonderen Ausgestaltung der Erfindung einfach ein die entsprechende Eigenschaft verleihendes oder förderndes Funktionalisierungsagens zugesetzt oder, in einer anderen Ausgestaltung, wird ein solches Funktionalsierungsagens, alleine oder in Kombination von mehreren derselben, zur Herstellung eines Funtionalisierungsmittels in Form einer Lösung oder Suspension verwendet. Beides ist dem Fachmann grundsätzlich geläufig, da es in jedem Fall nur darum geht ein oder mehrere Funktionalisierungsagenzien in Lösung zu bringen oder zu suspendieren, damit sie in applizierbarer Form vorliegen.

Wenn dem Precursor-Material nicht bereits Funktionalisierungsagens zugesetzt wird, wird bei dieser Ausgestaltung der Erfindung nach dem Trocknen oder Reinigen oder Reinigen und Trocknen die weitere Funktionalisierung der Substratoberfläche durch Auftragen eines aus einem oder mehreren Funktionalisierungsagenzien hergestellten Funktionalisierungsmittels, gefolgt von einem weiteren Trocknen oder Reinigen oder Reinigen und Trocknen, durchgeführt.

Eine alternative Ausgestaltung der vorliegenden Erfindung betrifft ein Verfahren zum Modifizieren von Oberflächen von harzgebundenen Kunststeinen, bei dem ein Gemisch von Wasser, einem oder mehreren organischen Lösungsmitteln und einer oder mehrer Säuren auf die Oberfläche des zu modifizierenden Substrats aufgebracht und die Oberfläche nachfolgend entweder getrocknet oder gereinigt oder gereinigt und getrocknet wird. Auch bei dieser Ausgestaltung des erfindungsgemäßen Verfahrens kann ein Funktionalisierungsagens bereits direkt in die vorstehend beschriebene Mischung eingebracht werden.

In einer Abwandlung dieses Verfahrens ist es auch möglich das Funktionalsierungsagenz nicht direkt in das Gemisch einzubringen, sondern im Anschluss an das Trocknen oder Reinigen oder Reinigen und Trocknen ein Funktionalisierungsmittel aufzubringen, um der Oberfläche eine oder mehrere der vorgenannten, durch Funktionalsisieren erhältlichen Eigenschaften zu verleihen.

Dabei ist, unabhängig davon ob weiter funktionalisiert wird ist das bei harzgebundenem Kunststein besonders vorteilhaft, weil sich hierdurch Poliervorgänge einsparen lassen oder zumindest mit deutlich weniger Aufwand durchgeführt werden müssen, wobei angenommen wird, dass die Vorteilhafte Wirkung auf der Kombination von Lösungsmittel und Säure beruht, die ein Erweichen oder Anlösen des Harzanteils des Kunststeins bewirkt und so ein Plastifizieren desselben erleichtert und zumindest zu einer glatteren Substratoberfläche führt.

Stärker bevorzugt ist bei einem Modifizieren von Kunststein aber die Ausgestaltung des erfindungsgemäßen Verfahrens, bei der wenigstens ein drei- oder vierwertiges Metallkation in dem Precursor-Material enthalten ist, da hier während des Plastifizierens des Harzanteils Metalloxidkristalle in sehr feiner und gleichmäßiger Verteilung auskristallisieren und in sehr dichter Packung für besondere Stabilität und somit Härte des behandelten Substrats sorgen.

Allgemein sind die erfindungsgmäß eingesetzten kolloidale Kieselsole beispielsweise günstig unter den Handelsbezeichnungen LEVASIL^{®} und KÖSTROSOL^{®} erhältlich und üblicherweise ohne weitere Vorbehandlung in dem vorliegenden Verfahren einsetzbar. Als Alkali-Wasserglas sind die ebenfalls günstig verfügbaren Li-, Na- und K-Wassergläser einsetzbar, welche entweder als Lösung erhältlich und direkt einsetzbar sind, oder vor dem Verwenden in einer entsprechenden Menge Wasser gelöst werden.

Nach dem Aufbringen des Precursor-Materials wird die behandelte mineralische Oberfläche kurz zum Entfernen von etwaig überschüssigem Material oder von Verschmutzungen gereinigt. Dieses kann auf einfache Weise erfolgen und im einfachsten Fall durch ein Abblasen der Oberfläche mit Druckluft oder einem Gebläse, gegebenenfalls auch durch Polieren mit ein oder mehreren Polierköpfen, Poliertellern oder einer Kombination von Abblasen und Polieren, wobei in diesem Fall die Oberfläche zunächst abgeblasen und nachfolgend mit den Polierköpfen oder Poliertellern leicht abpoliert wird.

Die Alkoxidreste sind allgemein beliebiger Natur, wobei aber C₁-C₄-Alkoxide allein aufgrund ihrer vergleichsweise günstigen Verfügbarkeit allgemein bevorzugt sind. Insbesondere sind die Methoxide, Ethoxide, iso- und n-Propoxide sowie die n-, iso- und tert.-Butoxide hervorzuheben. Besonders bevorzugt sind die Propoxide.

Es hat sich ferner überraschend gezeigt, dass es sich vorteilhaft auf die stattfindende Kristallisation auswirkt, wenn das Precursor-Material neben wenigstens einem Metallalkoxid Tetraethylorthosilikat-Hydrolysat und/oder Methyltriethylorthosilikat-Hydrolysat enthält, wobei eine Kombination von wenigstens einem Metallalkoxid, Tetraethylorthosilikat-Hydrolysat und/oder Methyltriethylorthosilikat-Hydrolysat sowie Kieselsol und/oder Alkaliwasserglas ein zu besonders harten Oberflächen führendes Precursor-Material darstellt und daher auch besonders bevorzugt ist.

Unabhängig von der jeweils gewählten Ausgestaltung des erfindungsgemäßen Verfahrens erfolgt das erwähnte Trocknen bevorzugt mittels einer Gebläseeinrichtung und/oder einer Heizeinrichtung, wie beispielsweise IR-Strahlern, oder einer Kombination von beidem, insbesondere mittels einer beheizten Gebläseeinrichtung.

Ebenfalls unabhängig von der jeweils gewählten Ausgestaltung des erfindungsgemäßen Verfahrens erfolgt das Reinigen bevorzugt im einfachsten Fall durch Abblasen mit Druckluft, einem Gebläse oder durch leichtes Polieren mit auf dem Gebiet der Keramik und der Kunststeinbearbeitung üblichen Poliereinrichtungen mit geringem Anpressdruck.

Der in einer einfachen Ausgestaltung der Erfindung unabhängige und, mit Ausnahme der ausschließlichen Auswahl von Kieselsol und/oder Alkaliwasserglas aus der eingangs genannten Gruppe zum Herstellen des Precursor-Materials, optionale Schritt der Funktionalisierung führt überraschend zu einer noch größeren Steigerung der Härte der Oberfläche des behandelten Substrats und verleiht der Substratoberfläche weitere, vorteilhafte funktionale Eigenschaften. Hier sind zunächst das Hydrophobieren und das Hydrophilisieren der Substratoberfläche zu nennen, die ein Anhaften von Schmutz erschweren oder ein leichtes Reinigen ermöglichen. Auch eine verbesserte chemische Beständigkeit der Oberfläche kann auf diese Weise erhalten werden. Ebenso antimikrobielle Eigenschaften. Auch die Farbe, Farbtiefe oder der Glanzgrad der Substrate ist auf diese Weise modifizierbar.

Dabei ist bevorzugt, dass das Funktionalisierungsmittel aus der Gruppe ausgewählt ist, die Hydophobierungsmittel, Hydrophilierungsmittel und antimikrobielle Eigenschaften verleihende Mittel umfassen, insbesondere Glycolsilane, Polyether-functionales trimethoxysilan, Amino- und Diamino-funktionelle Silane, bevorzugt 3-Aminopropylmethyldiethoxysilan (AMMO), 3-Aminopropyltriethoxysilan (AMEO), Bis(3- triethoxysilyl-propyl) amin, Bis(3-trimethoxysilyl-propyl) amin sowie 2-Aminoethyl-3-amino-propyltrimethoxysilane (DAMO), Epoxysilane, wie 3-Glycidyloxypropyltrimethoxysilan (GLYMO), 3-Glycidyloxypropyltriethoxysilan (GLYEO), Ureidosilane, insbesondere 3-Ureidopropyltriethoxysilan, polyethermodifiziertes Polydimethoxysilan, pyrogene Kieselsäure, Polyfluoropolyether, Polyurethan mit Polyfluoropolyether-Gerüst, PFPE-Tetraurethanacrylat, PFPE-Urethanmethacrylat, Fluoroacrylat und Fluoroacrylat-Polymere, wie Methyl 2-fluoroacrylat, Alkylsilane, Arylsilane, Cyclosiloxane, lineare Siloxane, Verbindungen von Zn, Sn, Cu, Fe, Ni und/oder Pt, TiO₂, Titanate, Titansilikate, Dichloro-2-n-octyl-4-isothiazolin-3-on, 2,3-Dichlorophenylpiperazin, 2-Phenylphenol, Benzoesäure, Polyhexanid, Isothiazoline und quartäre Ammoniumverbindungen umfassen.

Allgemein sind für Hydrophilierungen beispielsweise Glycolsilane verwendbar aber auch Verbindungen wie polyetherfunktionales Trimethoxysilan, amino- und diaminofunktionelle Silane wie 3-Aminopropylmethyldiethoxysilan (AMMO), 3-Aminopropyltriethoxysilan (AMEO), Bis(3-triethoxysilyl-propyl)amin, Bis(3-trimethoxysilyl-propyl)amin, 2-Aminoethyl-3-aminopropyltrimethoxysilan (DAMO), Epoxysilane, wie beispielsweise 3-Glycidyloxypropyltrimethoxysilan (GLYMO), 3-Glycidyloxypropyltriethoxysilan (GLYEO), Ureidosilane wie 3-Ureidopropyltriethoxysilan, polyethermodifiziertes Polydimethylsiloxan oder pyrogene Kieselsäuren.

Für Hydrophobierungen sind allgemein Siliconöle, Polyfluoropolyether (erhältlich als Fluorolink^{®} P54), Polyurethan mit Polyfluoropolyether-Gerüst (Fluorolink^{®} P 56), PFPE-Tetraurethanacrylat (Fluorolink^{®} AD 1700), PFPE-Urethanmethacrylat (Fluorolink^{®} MD 700), Fluoroacrylat bzw. Fluoroacrylat-Polymere wie zum Beispiel Methyl 2-fluoroacrylat verwendbar.

Darüber hinaus sind als Hydrophobierungsmittel beispielsweise die nachfolgend aufgeführten Verbindungen verwendbar. Dabei werden alle aufgeführten Silane in Wasser hydrolisiert und liegen in Lösung als Silanol bzw. polymerisiert als Siloxan vor.

Die Silane können als funktionelle Abgangsgruppe Methoxy-, Ethoxy-, oder Chloro-Gruppen haben.

Alkylsilane: Hexadecyltrimethoxysilan, Hexadecyltriethoxysilan, Octyltriethoxysilan, Octyltrimethoxysilan, Octyltrichlorosilan, Methyltrimethoxysilan

Methyltriethoxysilan, Isobutyltrimethoxysilan und (2,4,4-Trimethylpentyl)triethoxysilan.

Arylsilane: Phenyltrimethoxysilan und Phenyltriethoxysilan.

Cyclosiloxane: Dodecamethylcyclohexasiloxan, Decamethylcyclopentasiloxan und Octamethylcyclotetrasiloxan.

Lineare Siloxane: Polydimethylsiloxane, Hexamethyldisiloxan, Aminofunktionelles-Polydimethylsiloxan, Polydimethylsiloxan (OH terminiert).

Die Oberflächen der genannten Substrate können auch antimikrobiell ausgerüstet werden. Das heißt insbesondere durch die Inkorporation entsprechender Metalle oder Metallkationen, wie Silber, Platin, Kupfer, Zink, Zinn, Nickel und Eisen als Funktionalisierungsagenzien in das Precursor-Material oder in das Funktionalisierungsmittel werden insbesondere antibakterielle, fungizide, algizide und antivirale Oberflächeneigenschaften erhalten.

Besonders geeignet sind für eine entsprechende anitimikrobielle Funktionalität ,und damit als Funktionalisierungsagens uneingeschränkt im Rahmen der vorliegenden Erfindung einsetzbar, des weiteren Ti in der Form von TiO₂, insbesondere Anatas, Titanate, wie Alkali-, Erdalkalititanate, Metalltitanate, insbesondere Bariumtitanat, Strontiumtitanat, Aluminiumtitanat, Cobalttitanat, Certitant, Mangantitanate, Eisentitanate, Nickeltitanate, die Silikate der vorstehend genannten Metallkationen sowie Titansilikate.

Antibakteriell und fungizid wirkende organische Substanzen wie zum Beispiel Dichloro-2-n-octyl-4-isothiazolin-3-on, 2,3-Dichlorophenylpiperazin, 2-Phenylphenol, Benzoesäure, Polyhexanid, Isothiazoline, insbesondere Methylisothiazolinon, Chlormethylisothiazolinon, Benzisothiazolinon, Octylisothiazolinon und Dichloroctylisothiazolinon,quartäre Ammoniumverbindungen, z.B. Didecyldimethylammoniumchlorid; C12-16-Benzylalkyldimethylammoniumchlorid, Cetyltrimethylammoniumbromid, C12-14-Alkyl[(ethylphenyl)methyl]dimethylammoniumchlorid, Tetrabutylammoniumhydroxid, Cetylpyridiniumchlorid und Imidazol) sind entsprechend ebenfalls als Bestandteil des Funktionalisierungsmittels vorgesehen.

Darüber hinaus besteht auch die Möglichkeit die Farbe, die Farbtiefe und/oder den Glanzgrad der Substrate durch den Einsatz von dem Fachmann einschlägig bekannten Farbmittel und/oder Farbkörper, beispielsweise Ruß für eine Schwarzfärbung oder Farbvertiefung, als Funktionalisierungsagens zu modifizieren und zu verbessern. Dies ist insbesondere bei Kunststeinen von besonderer Bedeutung und daher bei selbigen bevorzugt.

Unabhängig von der gewählten Ausgestaltung des erfindungsgemäßen Verfahrens ist bevorzugt, wenn das Precursor-Material und/oder das Funktionalisierungsmittel jeweils als Lösung oder Suspension vorliegen, da diese gut handhabbar und dosierbar sind. Obwohl das Aufbringen der Lösung und/oder Suspension grundsätzlich auf beliebige Art, zum Beispiel durch Tauchen, Fluten, Schütten, Tropfen, Streichen und Drucken erfolgen kann ist ein Aufbringen durch Sprühen oder Drucken, zum Beispiel mittels der Technologie des Tintenstrahldrucks oder Digitaldrucks, bevorzugt, insbesondere ein Sprühen mit einem Sprühnebel mit feiner bis sehr feiner Tröpfchengröße. Dies wirkt sich vorteilhaft auf die Homogenität der Oberfläche des Behandelten Substrats aus.

Es ist stärker bevorzugt, wenn das Aufbringen des Precursor-Materials und das Aufbringen des Funktionalisierungsmittels gleichzeitig und/oder aus einer Mischung derselben erfolgt, weil auf diese Weise nur in einem Schritt gearbeitet wird und auch nur einmal getrocknet oder gereinigt oder getrocknet und gereinigt werden muss.

Die vorliegende Erfindung betrifft ferner ein Modifiziertes mineralisches Substrat, Glas- oder glasiertes Substrat, erhalten nach einer der vorstehend beschriebenen Verfahrensausgestaltungen in Form einer Platte, Fliese, Slabs, eines 3-D-Formteils und insbesondere in Form einer Küchenarbeitsplatte, Bodenfliese, eines Wasch- oder Spülbeckens, einer Duschtasse, eines Wand- oder Fassadenelements, eines Dämmelements oder eines Trockenbauelements.

Die vorliegende Erfindung wird nachfolgend anhand von Ausführungsbeispielen und unter Bezugnahme auf die beigefügten Abbildungen näher erläutert. Die Figuren zeigen Rasterelektronenmikroskop-Aufnahmen der unterschiedlicher Substrate in verschiedenen Auflösungen. Es zeigen:
- Figur 1: eine Oberfläche eines mit dem Precursor-Material nach Beispiel 1 behandelten Kunststeins;
- Figur 2: eine Oberfläche eines entsprechenden Kunststeins wie in Figur 1, jedoch ohne Oberflächenmod ifikation;
- Figur 3: eine Oberfläche eines Kunststeins wie in Figur 1 in größerer Auflösung;
- Figur 4: eine Oberfläche eines Kunststeins wie in Figur 2 in größerer Auflösung;
- Figur 5: eine Oberfläche einer Keramik, die mit einem Precursor-Material behandelt wurde, das ausgehend von Zr-n-Propoxid und kolloidalem Kieselsol hergestellt wurde;
- Figur 6: eine Oberfläche einer unbehandelten Keramik bei gleicher Auflösung wie in Figur 5;
- Figur 7: eine Oberfläche einer Keramik wie in Figur 5 bei größerer Auflösung;
- Figur 8: eine Pore in einer Keramik wie in den Figuren 5 und 7 bei noch größerer Auflösung,
- Figur 9: eine Oberfläche einer Keramik, die mit einem erfindungsgemäßen Precursor-Material und nachfolgend mit einem Hydrophobierungsmittel behandelt wurde, und
- Figur 10: eine Oberfläche einer Keramik mit Kristallabscheidungen in Poren wie in Figur 9 bei größerer Auflösung.

Wie bereits hierin erwähnt werden die Ausgangssubstanzen für das Precursor-Material vorsichtig in eine entsprechende Menge Wasser gegeben und für 2 bis 48 Stunden gerührt, wobei die Lösung, zumindest solange kein Kieselsol und/oder Alkaliwasserglas zugegeben wird, sich maximal leicht eintrübt. Dieses Precursor-Material kann so eingesetzt oder auch für längere Zeit gelagert werden.

Das so hergestellte Precursor-Material wird dann auf ein entsprechendes Substrat aufgebracht. Obwohl grundsätzlich jede Art des Auftragens anwendbar ist, die ein gleichmäßiges Benetzen der Substratoberfläche sicherstellt, ist es erfindungsgemäß jedoch bevorzugt das Auftragen durch Sprühen mit einem feinen Sprühnebel oder durch Drucken zu bewirken, weil auf diese Weise ein besonders gleichmäßiger, durchgängiger Materialauftrag erreicht werden kann. Außerdem lässt sich dabei die Auftragsmenge sehr leicht und gut regulieren. Allgemein reicht es, wenn die Oberfläche gerade vollständig benetzt ist.

Je nach Zusammensetzung des Precursor-Materials, insbesondere in Abhängigkeit von dem Anteil an leichtflüchtigen Bestandteilen, insbesondere Alkoholen oder anderen organischen Lösungsmitteln, erfolgt ein Auskristallisieren der teilhydrolysierten oder hydrolysierten Metallverbindungen des Precursor-Materials in Form ihrer Oxide oder Mischoxide innerhalb sehr kurzer Zeit, so dass beispielsweise ein Kunststein oder eine Keramik bereits nach einem einfachen Trocknen eine Oberfläche mit größerer Härte aufweist, als das unbehandelte Substrat. Einfacher kann das Trocknen bei Umgebungsbedingungen erfolgen, durch ein Abblasen mit Druckluft oder mittels eines Gebläses beschleunigt werden. Eine weitere Beschleunigung des Trocknens kann mittels beheizter Druck- oder Gebläseluft erfolgen oder zum Beispiel durch IR-Bestrahlung.

Da nur geringe Materialmengen zum Erzielen eines überraschend großen Effekts der Verbesserung der Oberflächenhärte erforderlich sind, bedarf das Verfahren in der Regel keiner weiteren Nachbehandlung, da bestenfalls geringe oder geringste Mengen überschüssiges Material vorliegen. Gleichwohl kann sich eine auf dem Gebiet übliche leichte Reinigung, wie mit geläufigen Poliereinrichtungen erfolgen, damit auch letzte Materialreste entfernt werden. Ein aufwendiges Polieren unter hohem Druck und Materialeinsatz an Polierhilfsmitteln ist nicht zwingend erforderlich. Gleichwohl führt ein intensiveres, insbesondere länger andauerndes, leichtes Polieren bei Keramik- und Natursteinsubstraten zu einer besseren Porenfüllung und in der Folge zumindest zu einer größeren Oberflächenhärte und bei Kunststeinen zu einem tieferen Modifizieren des Substrats und optisch ansprechenderen Oberflächen. Dabei ist die Anwendung von hohem Druck und/oder hoher Temperatur zumindest bis zu einem vollständigen Verfüllen der Poren zu vermeiden, weil ein sofortiges Verglasen der Oberfläche die Folge wäre.

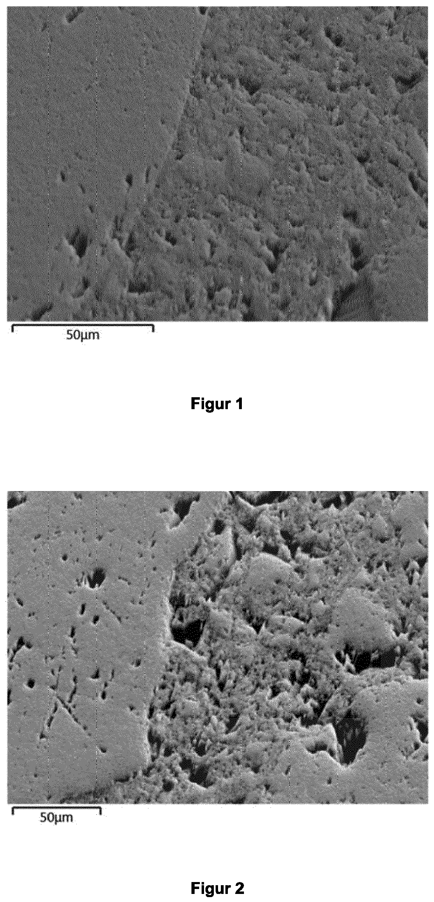

Figur 1 zeigt das Ergebnis des erfindungsgemäßen Verfahrens, bei dem eine Zusammensetzung eines Precursor-Materials gemäß dem unten angegebenen Beispiel 1 behandelt wurde. In der Figur ist im rechten Bildteil deutlich die Abscheidung von Zirkonoxidkristallen auszumachen, insbesondere den Zwischenraum zwischen Mineralischen Bestandteilen ausfüllen, von denen aber auf der Abbildung nur einer im linken Bilddrittel als fast vollständig glatte Fläche erkennbar ist, wobei die Glätte durch Auffüllen der ursprünglich vorhandenen Poren mit dem Precursor-Material und anschließendem Auskristallisieren hervorgerufen wurde.

Im Vergleich dazu ist auf der Abbildung in Figur 2, die einen unbehandelten Kunststein zeigt, ein wesentlich größeres Vorhandensein von porenartigen Zwischenräumen zu erkennen.

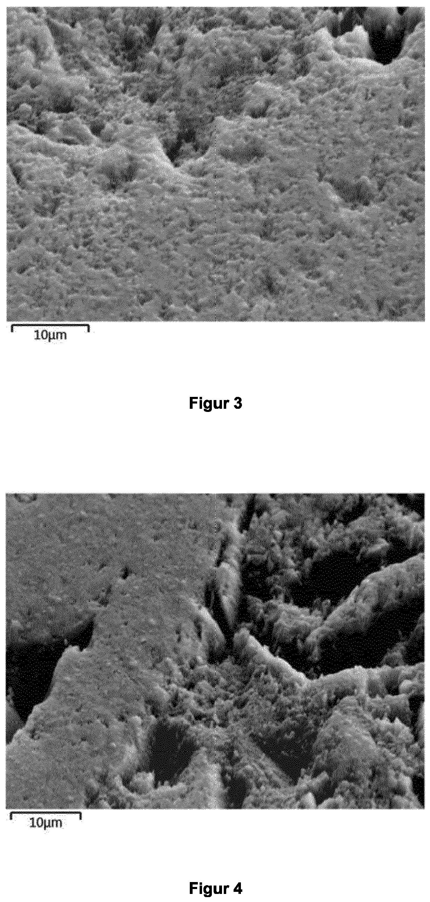

Figur 3 zeigt eine Oberfläche eines Kunststeins wie in Figur 1 in größerer Auflösung, wobei eine Abscheidung von Zirkonoxidkristallen nicht nur in den Poren, sondern auch auf der Oberfläche des mineralischen Bestandteils des Kunststeins zu erkennen ist. Gerade die Ausbildung einer praktisch durchgängigen Schicht von harten Zirkonoxidkristallen wird als wesentlicher Grund für dir größere Härte des behandelten Substrats angesehen und ist, insbesondere in Bezug auf die eingesetzte, geringe Menge an Precursor-Material unerwartet.

Figur 4 zeigt einen unbehandelten Kunststein Kunststein in der gleichen Auflösung wie Figur 3 zum Vergleich. Erkennbar sind auch hier die deutlich größeren und tieferen Poren oder Lücken.

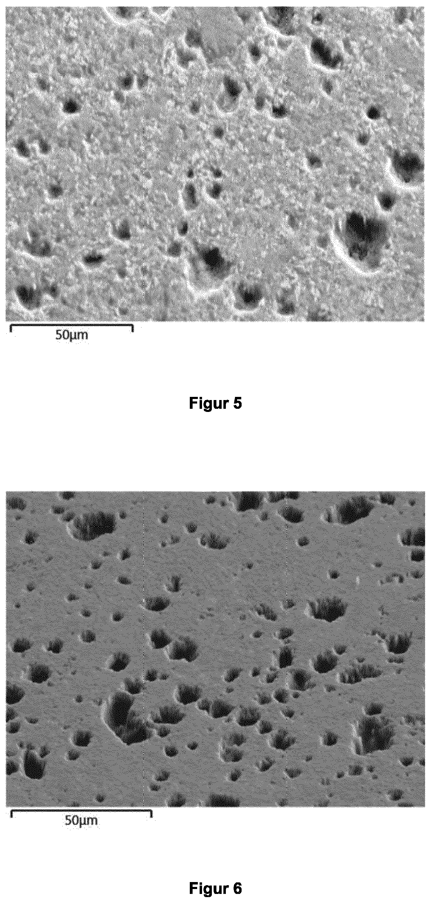

In einem weiteren Beispiel wurde eine Keramik mit einem Precursor-Material entsprechend Beispiel 13 behandelt. Das Ergebnis ist in Figur 5 dargestellt. Hier sind deutlich die Siliciumoxid- und Zirkonoxidkristalle, wahrscheinlich handelt es sich um Mischkristalle oder Mischungen der Kristalle, auf der Oberfläche und in den Poren des Substrats zu erkennen. Der Unterschied zu der in Figur 6 abgebildeten Oberfläche einer entsprechenden, unbehandelten Keramik sind sehr deutlich wahrzunehmen.

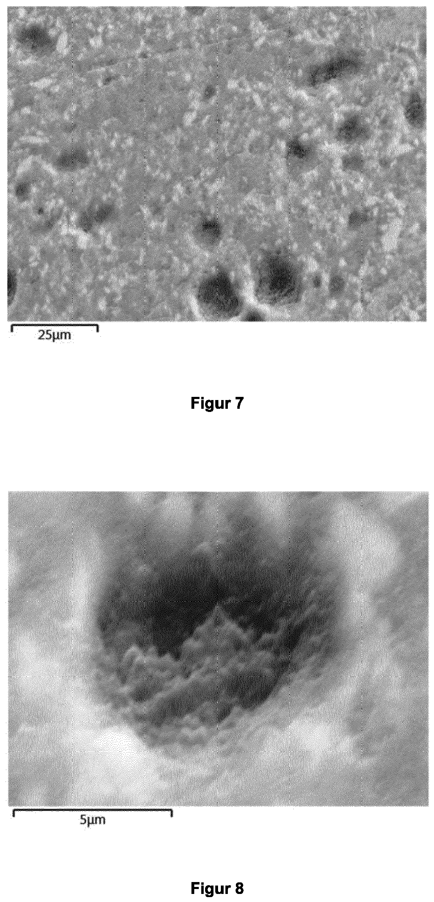

Deutlicher wird dies in Figur 7, die eine Keramik wie in Figur 5 in größerer Auflösung zeigt. Auch hier sind deutlich die Kristallabscheidungen zu erkennen sowie eine geringe Tiefe der Poren nach der Behandlung nach dem erfindungsgemäßen Verfahren. Noch besser erkennbar ist dieser Sachverhalt in Figur 8, die eine nach dem Aufbringen des wie zuvor beschriebenen Precursor-Materials entsprechend Beispiel 13 erfolgte Abscheidung in einer Pore der Keramik und damit ein Auffüllen derselben zeigt. In diesem Zusammenhang wird angenommen, dass gerade das Auffüllen und Stabilisieren der Poren neben dem Ausbilden einer praktisch durchgängigen Schicht einen erheblichen Beitrag zu der überraschenden Verbesserung der Oberflächenhärte des Substrats leistet. Eine Tatsache, die als unabhängig vom behandelten Substrat angesehen wird.

Bei einer anderen Ausgestaltung des erfindungsgemäßen Verfahrens wird zunächst ein Precursor-Material auf eine Substratoberfläche aufgebracht, getrocknet und/oder leicht gereinigt und nachfolgend ein Hydrophobierungsmittel und nachfolgend einfach getrocknet. Das Ergebnis ist in Figur 11 dargestellt. Diese Figur zeigt wie durch diese Behandlung auf einem Keramiksubstrat eine vollständig durchgängige Schicht unter Auffüllen sämtlicher Poren ausgebildet wurde, so dass anstelle von ursprünglichen Poren nur noch leichte Vertiefungen erkennbar sind.

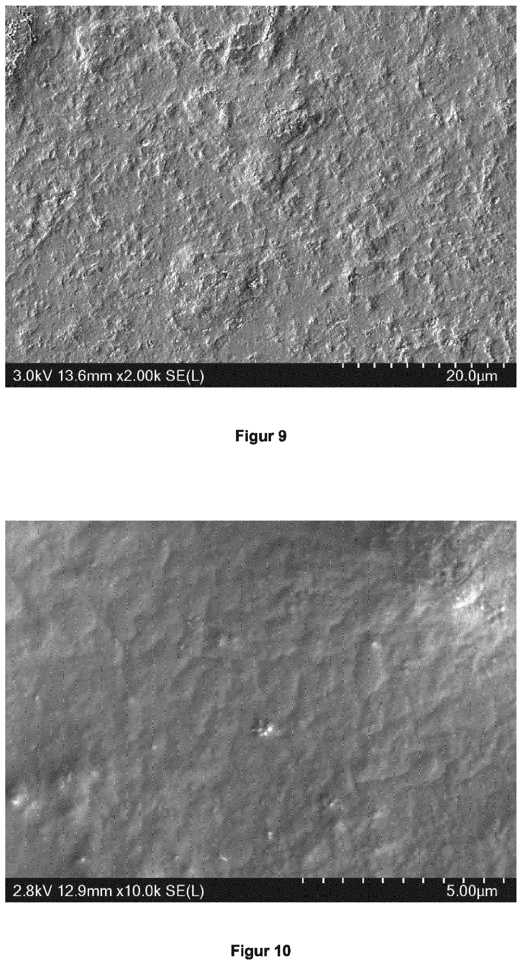

In Figur 10 ist eine Pore des in Figur 11 dargestellten, behandelten Keramiksubstrats formatfüllend dargestellt. Auffällig ist nicht nur, dass die Pore vollständig gefüllt ist, sie ist außerdem sehr glatt.

Anhand der Figuren 9 und 10 lässt sich der völlig unerwartete Befund einer nochmals gesteigerten Härte gegenüber einer ausschließlich mit Precursor-Material behandelten Keramik aufgrund der stärkeren Glättung der Oberfläche und sehr homogenen Schichtausbildung sehr gut veranschaulichen.

In einer weiteren unabhängigen Ausgestaltung des erfindungsgemäßen Verfahrens ist es gelungen Oberflächen von harzgebundenen Kunststeinen durch Behandlung mit einem Gemisch von Wasser, einem oder mehreren organischen Lösungsmitteln und einer oder mehrer Säuren durch Aufsprühen und nachfolgendem Trocknen und gegebenenfalls leichtem Reinigen durch länger andauerndes, leichtes Polieren unter wenigstens leichtem Anlösen und Erweichen des Harzanteils des Kunststeins sowie anschließendem Funktionalisieren in ihrer Härte zu verbessern und eine größere Farbtiefe zu verleihen. Hierfür sind ein oder mehrere Lösungsmittel wie Aceton, Acetylacetonat, Isopropanol und Ethylacetat in Kombination mit ein oder Mehreren von Salzsäure, Salpetesäure, Schwefelsäure und Essigsäure verwendbar und ausreichend. Die Steigerung der Oberflächenhärte ist zwar nicht so groß wie bei Verwendung des eingangs beschriebenen Precursor-Materials, zumindest führt sie aber zu einer merklichen Verbesserung der Ritzbeständigkeit, wobei die Farbvertiefung bereits hervorragend ist.

Diese Eigenschaftsverbesserungen werden dem bereits beschriebenen leichten Anlösen und Erleichtern oder Fördern des Plastifizierens und der damit einhergehenden Verbesserung der Glätte zugeschrieben.

Die Prozentangaben in den nachfolgenden Beispielen sind sämtlich in Gewichtsprozent.

Einzelne Bestandteile der Zusammensetzungen in den Beispielen werden dabei jeweils gemischt und für eine Dauer zwischen 2 und 48 Stunden gerührt. Beispiele 1 bis 16 sind Beispiele für Zusammensetzungen für das Precursor-Material.
Beispiel 1:

| | |
|---|---|
| demi. Wasser | 64,9% |
| Isopropanol | 27,3% |
| Zr-n-propoxid | 5,5% |
| Salzsäure 37% | 1,3% |
| Salptersäure 64,9% | 1,0% |

Beispiel 2:

| | |
|---|---|
| demi. Wasser | 61,5% |
| Isopropanol | 23,7% |
| Zr-n-propoxid | 12,5% |
| Salzsäure 37% | 1,3% |
| Salptersäure 64,9% | 1,0% |

Beispiel 3:

| | |
|---|---|
| demi. Wasser | 90,0% |
| Al-isopropoxid | 5,0% |
| Salptersäure 64,9% | 5,0% |

Beispiel 4:

| | |
|---|---|
| demi. Wasser | 90,5% |
| Al-isopropoxid | 7,5% |
| Salptersäure 64,9% | 2,0% |

Beispiel 5:

| | |
|---|---|
| demi. Wasser | 87,5% |
| Al-isopropoxid | 7,5% |
| Salptersäure 64,9% | 5,0% |

Beispiel 6:

| | |
|---|---|
| demi. Wasser | 88,0% |
| Al-isopropoxid | 10,0% |
| Salptersäure 64,9% | 2,0% |

Beispiel 7:

| | |
|---|---|
| demi. Wasser | 85,0% |
| Al-isopropoxid | 10,0% |
| Salptersäure 64,9% | 5,0% |

Beispiel 8:

| | |
|---|---|
| demi. Wasser | 83,0% |
| Al-isopropoxid | 15,0% |
| Salptersäure 64,9% | 2,0% |

Beispiel 9:

| | |
|---|---|
| demi. Wasser | 65,0% |
| Al-isopropoxid | 25,0% |
| Salptersäure 64,9% | 10,0% |

Beispiel 10:

| | |
|---|---|
| Zr-n-Propoxid | 5,0% |
| Triethoxy(2,4,4trimethylpentyl)silan | 13,2% |
| Decamethylcyclopentasiloxan | 6.2% |
| demi. Wasser | 65,6% |
| Polyfluoropolyether | 7,6% (Fluorolink^{®} P54) |
| Pt-Komplex in Silikon-Polymer | 1,1% (Wacker^{®} Katalysator C 05) |
| Salpetersäure 64,9 % | 1,3% |

Beispiel 11:

| | |
|---|---|
| Al-iso-Propoxid | 5,2% |
| Octyltriethoxysilan | 15,2% |
| Hexadecyltriethoxysilan | 7,6% |

| | |
|---|---|
| Triethoxy(2,4,4trimethylpentyl)silan | 7,6% |
| demi. Wasser | 50,8% |
| PFPE-Tetraurethanacrylat | 7,6% (Fluorolink^{®} AD 1700) |
| Pt-Komplex in Silikon-Polymer | 1,1% (Wacker Katalysator C 05) |
| Salpetersäure 64,9 % | 4,9% |

Beispiel 12:

| | |
|---|---|
| Kieselsol (7 nm) | 5,6% (Levasil^{®} CC 301) |
| Kieselsol (12 nm) | 7,4% (Levasil^{®} CC 401) |
| demi Wasser | 57,0% |
| Isopropanol | 10,9% |
| Zr-n-propoxid | 2,2% |
| Salzsäure 37% | 0,5% |
| Salptersäure 64,9% | 0,4% |
| Ameisensäure 85% | 8,0% |
| Tetraethylorthosilikat | 8,0% (Dynasylan^{®} A) |

Beispiel 13:

| | |
|---|---|
| Kieselsol (5 nm) | 14,0% |
| Kieselsol (22 nm) | 18,5% |
| demi. Wasser | 49,8% |
| Isopropanol | 13,7% |
| Zr-n-propoxid | 2,8% |
| Salzsäure 37% | 0,7% |
| Salptersäure 64,9% | 0,5% |

Beispiel 14

| | |
|---|---|
| demi. Wasser | 45,1% |
| Isopropanol | 11,9% |
| Zr-n-propoxid | 6,3% |
| Salzsäure 37% | 0,6% |
| Salptersäure 64,9% | 0,5% |
| Ameisensäure 85% | 14,3% |
| Tetraethylorthosilikat | 14,3% (Wacker TES 28) |
| Ethanol | 7,0% |

Beispiel 15

| | |
|---|---|
| Kieselsol (55 nm) | 6,0% |
| Kieselsol (9 nm) | 10,2% |
| Kieselsol (5-100 nm) | 1,6% |
| demi. Wasser | 51,1% |
| Essigsäure 60% | 12,5% |
| Ameisensäure 85% | 6,1% |
| Tetraethylorthosilikat | 8,8% |
| Isopropanol | 3,7% |

Beispiel 16

| | |
|---|---|
| demi. Wasser | 73,7% |
| Isopropanol | 17,7% |
| Zr-n-propoxid | 3,6% |
| Salzsäure 37% | 0,8% |
| Salptersäure 64,9% | 0,7% |
| LWG | 3,5% |

Eine hydrophile Funktionalisierung ist mit den Zusammensetzungen der Beispiele 17 und 18 möglich:
Beispiel 17:

| | |
|---|---|
| 3-Aminopropyltriethoxysilan (AMEO) | 2,5% |
| Polyether-functional trimethoxysilan | 6,1% |
| Kieselsol (5 nm) | 1,5% |
| Kieselsol (9 nm) | 4,5% |
| demi. Wasser 89,5% | |
| Essigsäure 60% | 4,0% |
| Isopropanol | 0,9% |

Beispiel 18:

| | |
|---|---|
| Bis(3-triethoxysilyl-propyl) amin | 5,8 |
| 3-Glycidyloxypropyltrimethoxysilan (GLYMO) | 2,7% |
| polyethermodifiziertes Polydimethylsiloxan | 19,1% |
| demi. Wasser | 62,4% |
| Pyrogene Kieselsäure | 10% |

Eine hydrophobe Funktionalisierung ist durch Einsatz eine Funktionalisierungsmittels mit einer Zusammensetzung gemäß den Beispielen 19 und 20 möglich.
Beispiel 19:

| | |
|---|---|
| Triethoxy(2,4,4trimethylpentyl)silan | 17,1% |
| Methyltrimethoxysilan | 2.2% |
| demi. Wasser | 75,3% |
| Salpetersäure | 1,2% |
| Fluoroacrylat | 4,2% |

Beispiel 20:

| | |
|---|---|
| Octyltriethoxysilan | 4,2% |
| Hexadecyltriethoxysilan | 2,5% |
| Phenyltriethoxysilan | 5,6% |
| aminofunktionelles Polysiloxan | 1,2% |
| demi. Wasser | 83,9% |
| Essigsäure 60% | 2,1% |
| Titantetrabutanolat | 0,5% |

## Patentansprüche

1. Verfahren zum Modifizieren der Oberflächeneigenschaften von mineralischen Substraten, Glas- und glasierten Substraten, bei dem ein Precursor-Material auf die Oberfläche des zu modifizierenden Substrats aufgebracht und die Oberfläche nachfolgend entweder getrocknet oder gereinigt oder gereinigt und getrocknet wird.

2. Verfahren nach Anspruch 1,
**dadurch gekennzeichnet, dass**
das Precursor-Material ausgehend von einem oder mehreren Mitgliedern der drei- und vierwertige Metallalkoxide, kolloidales Kieselsol, Alkaliwasserglas, Tetraethylorthosilikat-Hydrolisat, Methyltriethylorthosilikat-Hydrolysat und drei- oder vierwertige Metallhalogenide enthaltenden Gruppe hergestellt ist, wobei das Precursor-Material nicht ausschließlich ausgehend von kolloidalem Kieselsol, Alkaliwasserglas oder einer Kombination dieser beiden hergestellt ist.

3. Verfahren nach einem der Anspruch 2,
**dadurch gekennzeichnet, dass**
die drei- und/oder vierwertigen Metallalkoxide aus den Metallalkoxiden von B, AI, Si,Ti und Zr und die Metallhalogenide aus Tetrachlorsilan, Trichlorsilan, Titantetrachlorid, Titantrichlorid, Aluminiumtrichlorid, Zirkoniumtetrachlorid sowie Bortrichlorid ausgewählt sind.

4. Verfahren zum Modifizieren von Oberflächen von harzgebundenen Kunststeinen, bei dem ein Gemisch von Wasser, einem oder mehreren organischen Lösungsmitteln und einer oder mehrer Säuren auf die Oberfläche des zu modifizierenden Substrats aufgebracht und die Oberfläche nachfolgend entweder getrocknet oder gereinigt oder gereinigt und getrocknet wird.

5. Verfahren nach einem der Ansprüche 1 bis 4,
**dadurch gekennzeichnet, dass**
ferner eine weitere Funktionalisierung der Substratoberfläche durch Einbringen eines Funktionalisierungsagens in das Precurser-Material oder nach einem Trocknen oder Reinigen oder Reinigen und Trocknen Auftragen eines Funktionalisierungsmittels, gefolgt von einem weiteren Trocknen oder Reinigen oder Reinigen und Trocknen, durchgeführt wird.

6. Verfahren nach einem der Anspruch 5,
**dadurch gekennzeichnet, dass**
das Funktionalisierungsagens aus der Gruppe ausgewählt ist, die Hydophobierungsmittel, Hydrophilierungsmittel, Farbmittel und Farbkörper und antimikrobielle Eigenschaften verleihende Mittel umfassen, insbesondere Glycolsilane, Polyether-functionales trimethoxysilan, Amino- und Diamino-funktionelle Silane, bevorzugt 3-Aminopropylmethyldiethoxysilan (AMMO), 3-Aminopropyltriethoxysilan (AMEO), Bis(3-triethoxysilyl-propyl) amin, Bis(3-trimethoxysilyl-propyl) amin sowie 2-Aminoethyl-3-aminopropyltrimethoxysilane (DAMO), Epoxysilane, wie 3-Glycidyloxypropyltrimethoxysilan (GLYMO), 3-Glycidyloxypropyltriethoxysilan (GLYEO), Ureidosilane, insbesondere 3-Ureidopropyltriethoxysilan, polyethermodifiziertes Polydimethoxysilan, pyrogene Kieselsäure, Polyfluoropolyether, Polyurethan mit Polyfluoropolyether-Gerüst, PFPE-Tetraurethanacrylat, PFPE-Urethanmethacrylat, Fluoroacrylat und Fluoroacrylat-Polymere, wie Methyl-2-fluoroacrylat, Alkylsilane, Arylsilane, Cyclosiloxane, lineare Siloxane, Verbindungen von Zn, Sn, Cu, Fe, Ni und/oder Pt, TiO₂, Titanate, Titansilikate, Dichloro-2-n-octyl-4-isothiazolin-3-on, 2,3-Dichlorophenylpiperazin, 2-Phenylphenol, Benzoesäure, Polyhexanid, Isothiazoline und quartäre Ammoniumverbindungen, wobei Funktionalisierungsmittel aus einem oder mehreren der Funktionalisierungsagenzien als Lösung oder Suspension erhältlich sind.

7. Verfahren nach einem der vorhergehenden Ansprüche,
**dadurch gekennzeichnet, dass**
das Precursor-Material und/oder das Funktionalisierungsmittel jeweils als Lösung oder Suspension vorliegt und mittels Sprühen oder Drucken aufgebracht wird.

8. Verfahren nach einem der Ansprüche 5 bis 6,
**dadurch gekennzeichnet, dass**
das Aufbringen des Precursor-Materials und das Aufbringen des Funktionalisierungsmittels gleichzeitig oder aus einer Mischung derselben erfolgt.

9. Modifiziertes mineralisches Substrat erhalten nach einem der vorhergehenden Ansprüche in Form einer Platte, Fliese, Slabs, eines 3-D-Formteils und insbesondere in Form einer Küchenarbeitsplatte, Bodenfliese, eines Wasch- oder Spülbeckens, einer Duschtasse, eines Wand- oder Fassadenelements, eines Dämmelements oder eines Trockenbauelements.
